(19) Europäisches Patentamt
European Patent Office
Office européen des brevets

(11) **EP 1 883 185 B1**

(12) **EUROPEAN PATENT SPECIFICATION**

(45) Date of publication and mention
of the grant of the patent:
**08.04.2009 Bulletin 2009/15**

(51) Int Cl.:
***H04L 12/56*** (2006.01)

(21) Application number: **06118144.2**

(22) Date of filing: **28.07.2006**

(54) **Method and apparatus for obtaining virtual coordinates**

Verfahren und Vorrichtung zum Erlangen von virtuellen Koordinaten

Méthode et appareil pour obtenir des coordonnées virtuelles

(84) Designated Contracting States:
**DE GB**

(43) Date of publication of application:
**30.01.2008 Bulletin 2008/05**

(73) Proprietor: **NTT DoCoMo, Inc.**
**Tokyo (JP)**

(72) Inventors:
- **Tschopp, Dominique**
  **1005, Lausanne (CH)**
- **Widmer, Jörg**
  **81539, München (DE)**
- **Diggavi, Suhas**
  **1005, Lausanne (CH)**
- **Grossglauser, Matthias**
  **1018, Lausanne (CH)**
- **Prehofer, Christian**
  **81477, München (DE)**

(74) Representative: **Betten & Resch**
**Patentanwälte**
**Theatinerstrasse 8**
**(Fünf Höfe)**
**80333 München (DE)**

(56) References cited:
- **R. FONSECA, UC BERKELEY ET AL: "Beacon Vector Routing: Scalable Point-to-Point Routing in Wireless Sensornets" PROCEEDINGS OF THE 2ND SYMPOSIUM ON NETWORKED SYSTEMS DESIGN AND IMPLEMENTATION USENIX NSDI 05, 2 May 2005 (2005-05-02), - 4 May 2005 (2005-05-04) XP002408361 Boston, MA, USA**
- **STEFAN FUNKE, STANFORD UNIVERSITY, CA: "Topological hole detection in wireless sensor networks and its applications" DIALM-POMC '05: PROCEEDINGS OF THE 2005 JOINT WORKSHOP ON FOUNDATIONS OF MOBILE COMPUTING, 2 September 2005 (2005-09-02), pages 44-53, XP002408362 Cologne, Germany**

**Description**

**FIELD OF THE INVENTION**

The present invention relates to a method of obtaining virtual coordinates for the nodes of a network.

**BACKGROUND OF THE INVENTION**

Ad hoc networks are wireless networks with no central infrastructure. All nodes act as terminals, but also as relay routers. More precisely, this means that a node trying to communicate with another node outside its radio range will send its packets to one of its neighboring nodes, which in turn will forward the packets to its neighbors and so on, until the packet reaches the destination. This immediately raises the following question: how can a node, which only knows the destination's identifier, know to whom it needs to forward its packets to reach that destination?

Typically, one wants to route on the shortest possible path to the destination, which implies a minimal use of network resources such as bandwidth, power, etc. and minimizes the control overhead (i.e., all packets necessary to find and maintain these paths). The main paradigms for routing algorithms for ad hoc networks either utilize the link-based communication graph (topology) or the geometry of the wireless nodes (geographic routing). Topology-based routing takes into account the existence of complex communication channels but does not utilize the inherent geometry of a wireless network. It relies on variations of internet protocols, such as "Bellman-Ford" or "Link State Routing" to establish and maintain paths which are then stored in routing tables (see e.g. C. E. Perkins and P. Bhagwat, Highly dynamic destination-sequenced distance-vector routing (DSDV) for mobile computers, In ACM SIGCOMM 94, pages 234-244, London, 1994, or T. Clausen, P. Jacquet, A. Laouiti, P. Muhlethaler, a. Qayyum, and L. Viennot, Optimized link state routing protocol, In IEEE INMIC, Pakistan, 2001).

With geographic routing packets are routed based on the geographic positions of nodes (see e.g. G.G. Finn, Routing and addressing problems in large metropolitan-scale internetworks, ISI Research Report ISU/RR-87-180, March 1987, or P. Bose, P. Morin, I. Stojmenovic and J. Urrutia, Routing with guaranteed delivery in ad hoc wireless networks, ACM Wireless Networks, November 2001).

Typically, a packet is forwarded greedily by sending it to the neighbor that makes the most forward progress towards the position of the destination, until the packet reaches the final destination.

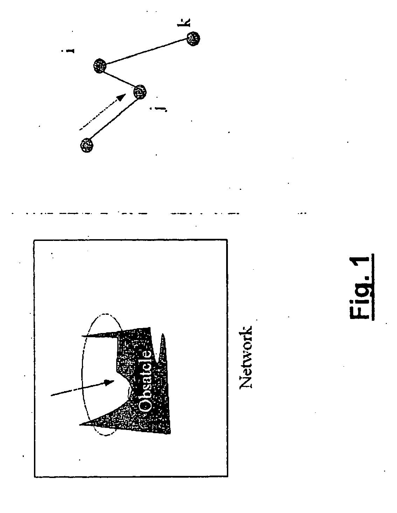

The limitation of topology-based routing is that route discovery and maintenance are based on flooding and are expensive in terms of overhead, in particular in mobile and uncertain environments in which it is hard to maintain a stable end-to-end route. Geographic routing instead relies heavily on the geometry, ignoring complex link behavior. The intuition behind greedy forwarding is that the geographic coordinates of the devices are a good approximation of the network topology. However, this is not always true, and packets can get stuck in so called dead-ends (i.e., a node is reached which has no neighbor geographically closer to the destination than itself). Such dead-ends require costly recovery procedures, which should be avoided. Dead-ends can be local or global. A large void in the geometry will cause many packets to get stuck while traveling in a certain direction, but a small local misplacement (e.g. due to a noisy position estimate) can also block packets. This is exemplarily illustrated in Fig. 1, where on the left, the entire network is shown; packets traveling in the direction of the arrow will all get stuck because of the large obstacle. On the right, a local disordering is shown. Packets for node k get stuck at j because node i is slightly further away from k than j,

Geographic routing also requires every node to know its own position. It is commonly assumed that nodes are equipped with some form of positioning hardware, such as for instance a "Global Positioning System (GPS)" device. However, such devices can be expensive and/or consume too much power for battery-life limited nodes. While solutions exist to obtain position information without the help of GPS (see e.g. S. Capkun, M. Hamdi, J. Hubaux, GPS-Free Positioning in Mobile ad-hoc Networks, Proceedings of the 34th Annual Hawaii International Conference on System Sciences, 2001), building and maintaining this information consumes significant network resources. Further, the channel quality is not necessarily a function of the distance between nodes, for instance due to scattering. Nodes also need to update and query a form of distributed database, a so called location service, in order to learn the position of the destination they intend to send packets to. Typically this cost is lower than the aforementioned path discovery cost for topology based routing. However, in mobile environments in which positions change rapidly, this cost can grow as nodes need to increase the update frequency.

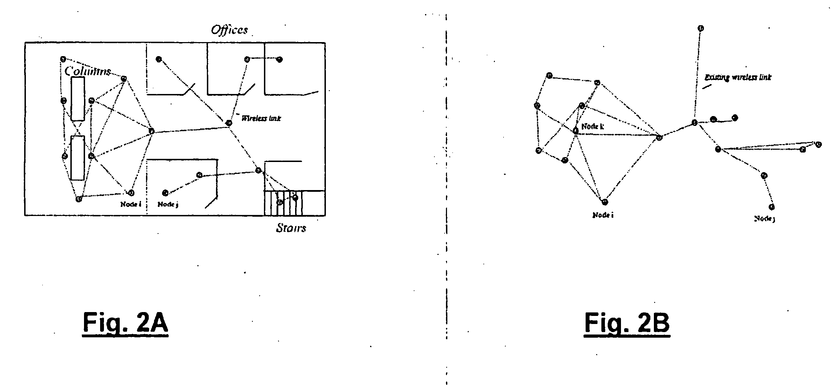

To avoid the disadvantages of topology-based and geographic routing, it is possible to do routing based on virtual coordinates of nodes, instead of real geographic coordinates. Such coordinates are usually assigned to nodes based on the underlying connectivity graph (i.e., nodes that are direct neighbors or connected through few intermediate hops have similar coordinates). Virtual coordinates can lead to more optimal routing schemes, as nodes which require fewer resources to communicate are placed close together in the virtual coordinate system. In particular, greedily forwarding packets in the direction of the destination should not lead to arbitrarily bad routes. Virtual coordinates offer some guarantee that when you are approaching the target in the coordinate system you are also approaching it in the connectivity graph. In order to be used in conjunction with a location service, the virtual coordinates of nodes should not fluctuate too much over time i.e., the nodes should not "jump" in the virtual space. The connectivity graph and node positions of ad hoc terminals in an office environment are shown in Fig. 2A. Greedy routing with those real coordinates is likely to yield poor performance. A possible embedding of the connectivity in a 2-dimensional virtual space is shown in Figure 2B. It should be noted that nodes i and j, which are geographically close in the real world but several hops apart in the connectivity graph are now well separated in the virtual space. Shortest path distances of the connectivity graph are much better captured by those virtual coordinates and greedy routing would yield significantly better performance.

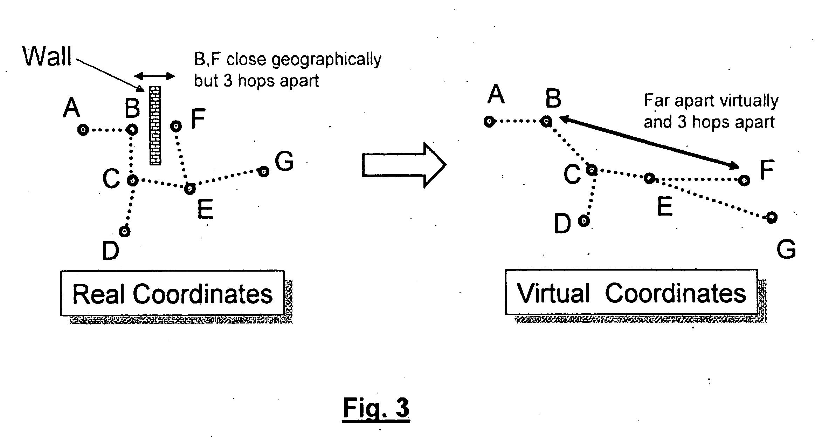

Another example where virtual coordinates are preferable over geographic coordinates is shown in Fig. 3. The left-hand side shows the representation of the network using real geographic coordinates. One recognizes that nodes B and F, while geographically being very close, are actually far away of each other in terms of connectivity. This is reflected when the nodes are represented by virtual coordinates as shown on the right-hand side of Fig. 3, where it can be seen that node B and F are far apart from each other.

Embeddings (i.e. the representation of the location of nodes in the network through virtual coordinates based on connectivity) are meaningful when the communication overhead to establish and maintain the virtual coordinate system is lower than the communication overhead with topology based routing or the dead-end recovery overhead with real coordinates. A desirable property is furthermore that the overhead does not grow with the number of nodes. Several approaches have been proposed for embedding connectivity graphs in ad hoc networks, some of which are briefly introduced below.

In "A. Rao, S. Ratnasamy, C. Papadimitriou, S. Shenker, and I. Stoica, Geographic routing without location information, Proceedings of the Annual International Conference on Mobile Computing and Networking, MOBICOM, 2003" a routing scheme with a distributed relaxation algorithm is presented which iteratively builds a virtual coordinate system. The algorithm assumes that a number of so-called perimeter nodes (located on the border of the network) know their real coordinates in advance. All other nodes start out with random virtual coordinates. Then, at every iteration, non-perimeter nodes update their virtual coordinates by averaging the coordinates of their neighbors. If perimeter nodes do not know their coordinates or if nodes do not even know that they are perimeter nodes, a procedure is proposed to obtain such information before applying the relaxation algorithm (averaging). This procedure is based on flooding and is expensive in terms of overhead as the number of message grows significantly with the network size. Locating the beacons on the perimeter yields excellent performance in terms of success rate of greedy routing, but the cost to find and maintain these beacons is high in terms of overhead when the topology is dynamic.

Beacon Vector Routing (see e.g. R. Fonseca, S. Ratnasamy, J. Zhao, C. T. Ee, D. Culler, S. Shenker, I. Stoica. Beacon-Vector Routing: Scalable Point-to-Point Routing in Wireless Sensor Networks, In NSDI, 2005) assigns virtual coordinates to nodes based on their hop distance to several randomly chosen beacon nodes. The random choice is made initially and the beacon set does not change unless a beacon fails. Here, the dimensionality of the coordinate space corresponds to the number of beacons. As in the approach of Rao et al., greedy forwarding over the node coordinates is used as routing scheme. A distance metric is defined that takes into account that greedy routing in the direction of a beacon is more likely to lead to the destination than routing away from the beacon. In case of a dead-end, a small scope flooding is initiated to find a node that again provides greedy progress. This scheme however does not cope with mobile nodes or uncertain channel environments. Movement of beacons would lead to large shifts in the virtual positions of the nodes, which in turn would imply an unstable coordinate system. Updating a distributed database (location service) with the positions of the nodes in that case would be extremely costly in terms of overhead due to the frequent and large movements of nodes in the virtual space. If the updates were not done, the quality of routing would be very poor as packets would be sent to very inaccurate locations.

The GEM framework (see e.g. James Newsome and Dawn Song, GEM: graph embedding for routing and data-centric storage in sensor networks without geographic information. In 1 st international conference on embedded networked sensor systems, 2003) provides an efficient infrastructure for data-centric information processing and storage by jointly addressing the issues of routing and mapping from data names to nodes. It uses a ringed tree graph that is embedded into the network topology. The virtual coordinates obtained this way are similar to polar coordinates. Every node is assigned a label and an angle (orientation and orientation depth in the tree) and routing is done such that the packet is forwarded to a node with an angle and a depth closer to destination. The load on the nodes located in the heart of the network is very high in this approach, as either all traffic must flow through the central beacon node or a costly reordering procedure must be applied. Again, under mobility the coordinate system would be unstable.

It should be noted that the approaches of Fonseca et al. and Newsome et al. do not seem to efficiently take care of local disordering but indeed considerably reduce the number of global dead-ends.

It is therefore desirable to provide a beacon-based embedding that is robust under mobility and realistic channel conditions.

## SUMMARY OF THE INVENTION

The present invention is defined in the independent claims. The dependent claims define embodiments of the invention.

According to one embodiment there is provided a method of obtaining virtual coordinates for the nodes of a network, said virtual coordinates being a representation of the location of the nodes of said network and said virtual coordinates being based on beacon signals which are sent from a set of beacon nodes in the network, said method comprising:

using said beacon signals to determine a proximity measure being indicative of a proximity between a node receiving said beacon signal and the node which has sent said beacon signal;
determining virtual coordinates of the nodes having received said beacons based on said proximity measure, wherein said method further comprises:

regularly sending said beacon signals to update said virtual coordinates of said nodes, and
replacing the nodes which are belonging to said set of beacon nodes and which are sending beacon messages by new nodes taking over the beacon role, whereas said replacement is performed regularly in accordance with a predefined replacement scheme to improve said determination of virtual coordinates.

While in the prior art the set of beacon nodes was fixed, according to the present invention the set of beacon nodes is changed regularly by replacing one member through another according to a certain replacement scheme. This has the effect that the beaconing continuously yields "new information" from other parts of the network which so far have not been considered, and this in turn yields a better embedding and can deal with the effect of the mobility of nodes.

According to one embodiment said replacement scheme comprises:

for a first beacon node in said set of beacon nodes, determining the distances of said first beacon to the other beacons in said set of beacon nodes according to some distance measure;
selecting the beacon for which the distance measure yielded the smallest value;
calculate said distance measure to said selected beacon node for the neighboring nodes of said first beacon node;
if for one of said neighboring nodes said distance measure is higher than the distance measure of said first beacon node, replacing said first beacon node in said set of beacon nodes by said neighboring node for which the distance measure yielded a higher value.

In this manner the beacon nodes are "pushed away" from each other, or in other words the beacon nodes are pushed towards the perimeter of the network. This avoids shortcomings of prior art where a set of beacons does not change except if a beacon is damaged. In this case, a shift in coordinates caused by the mobility of nodes leads to an unstable and inaccurate embedding.

According to one embodiment said method further comprises:

performing said replacement of said beacon only if one or more of the following conditions are fulfilled:

said distance difference lies beyond a certain threshold;
said distance difference remains present for a certain amount of time;
the beacon node which should be replaced has moved in the virtual space;
the neighbour set of the beacon node which should be replaced has changed.

By this kind of safeguard measures a too frequent change of the beacon node set which could e.g. lead to oscillations is avoided.

According to one embodiment said method comprises:

choosing randomly an initial set of beacons;
determining the coordinates of an individual node in the network based on the distance to said beacon nodes which are respectively determined based on the number of hops which a beacon signal travels from a corresponding beacon node to said individual node;
determining said coordinates for all nodes in said network including said beacon nodes;
performing a replacement scheme comprising:

based on the thus determined coordinates, determine for a first beacon node the minimum distance to any of the beacon nodes and if a neighbouring node of said first beacon node yields a higher distance, replacing said first beacon node by said neighbouring node; and

repeating said replacement scheme for all of said beacon nodes in said set of beacon nodes.

In this embodiment the dimension of the virtual coordinates corresponds to the number of beacons. Each beacon k sends a beacon signal, and based on the number of hops it travels to the node i in the network the k-th component of the virtual coordinate of node i is determined. Moreover, this coordinate system also yields coordinates for the beacons themselves, and based thereupon the replacement scheme can be executed which checks whether a beacon should be pushed towards the perimeter. In this manner, based on an initially randomly chosen set of beacons, the whole set of beacons dynamically adjusts to the circumstances such that after some iterations the beacons lie at the perimeter of the network which is most preferable.

According to one embodiment said proximity measure is based on the number of hops which a beacon travels from a beacon node to a node in the network; and said distance measure is based on the Euclidean distance calculated between a node in said network and a beacon node in said network based on their respective virtual coordinates.

According to one embodiment proximity measures or distance measures are determined for individual nodes by averaging the value determined for an individual node with the value obtained for its neighbours.

The local averaging makes the coordinate values and the proximity measures more stable against local distortions.

According to one embodiment the likelihood of a node acting as a beacon is adapted based on one or more of the following parameters:

the stability of the virtual coordinates;
the number of nodes in the network;
the location of the node with respect to beacons.

In this manner the whole mechanism may adapt to the global situation in the network.

According to one embodiment there is provided an apparatus for obtaining virtual coordinates for the nodes of a network, said virtual coordinates being a representation of the location of the nodes of said network and said virtual coordinates being based on beacon signals which are sent from a set of beacon nodes in the network, said apparatus comprising:

a module for using said beacon signals to determine a proximity measure being indicative of a proximity between a node receiving said beacon signal and the node which has sent said beacon signal;
a module for determining virtual coordinates of the nodes having received said beacons based on said proximity measure, wherein said method further comprises:

a module for regularly sending said beacon signals to update said virtual coordinates of said nodes, and
a module for replacing the nodes which are belonging to said set of beacon nodes and which are sending beacon messages by new nodes taking over the beacon role, whereas said replacement is performed regularly in accordance with a predefined replacement scheme to improve said determination of virtual coordinates.

According to one embodiment there is provided an apparatus for routing a message from a source to a destination through a network, said apparatus comprising:

a module for using the virtual coordinates which have been determined using an apparatus method according to one of claims 10 to 18 to determine a route for routing said packet from said source to said destination.

This makes use of the efficient routing which can be achieved by the virtual coordinates determined by embodiments of the invention.

According to one embodiment there is provided a computer program which when being executed on a computer enables said computer to carry out a method according to embodiments of the invention

## DESCRIPTION OF THE DRAWINGS

Fig. 1 illustrates network environments in which the present invention may be applied.
Figs. 2A and 2B illustrate environments in which the present invention may be applied, the left-hand side in geographic and the right-hand side in virtual coordinates.

Figs 3A and 3B illustrate further environments in which the present invention may be applied, the left-hand side in geographic and the right-hand side in virtual coordinates.

Fig. 4A schenatically illustrates the shift of a coordinate system due to a change in the network.

Fig. 4B schematically illustrates how an embedding changes over time due to the mobility of the nodes.

Fig. 5 schematically illustrates a handoff procedure according to an embodiment of the invention.

Fig. 6 schematically illustrates an embedding procedure according to an embodiment of the invention.

## DETAILED DESCRIPTION

Embodiments of the invention will now be described in detail in the following. In particular, the embodiments relate to the following two aspects:

- •    Beacon Hand-off Management
- •    Probabilistic Beaconing

Those methods will presented in the sequel. Table 1 summarizes additional notations used throughout this document.

*Table 1: Table of Notations*

| $I$ | unique identifier of a node |
|---|---|
| $Xj$ | true geographical coordinates of node j |
| $X_j$ | virtual coordinates of node j |
| $xkj$ | virtual coordinates of node j at time k |
| $d$ | dimension of embedding=number of components in x |
| $E_{ij} = \|x_i - x_j\|$ | Euclidean distance i and j in the virtual space |
| $rij$ | proximity between i and j in the topology (e.g., shortest path distance in hops) |
| $Ni$ | one-hop neighbors of i excluding i |

Beacon Hand-off Management is particularly applicable to Bourgain type embeddings (see Rao et al. and Fonseca et al.). In such schemes, the coordinates of nodes are given by their distances to beacons. To avoid huge shifts in the coordinate system, nodes marked as beacons "hand-off' their beacons (i.e. hand over their property of being a beacon node to another node in the network) in such a way that floods always originate from more or less the same area of the network. More precisely, there are d beacons, originally randomly picked and numbered, in the network. The beacon corresponding to dimension u is labeled $b_u$. Let us call B(k) the set of the d beacon nodes at time k and $P_i(u,k)$ the last proximity that node-i-knows to-$b_u$ at time k. At iteration k, beacon w = k mod d floods the network. All other nodes in the network obtain their hop distance (proximity) to $b_w$ this way. The information stored by a node i at time k is its beacon vector $v_i$ and its virtual position. Note that at iteration k, for $v \neq w$, $P_i(v,k)$ is outdated, but is still used to calculate the coordinates. Below is given the stored information for node i which comprises the beacon vector (the distances of node i to the beacons 1 to d at time k) and the virtual coordinate $x_i$.

$$v_i = \begin{bmatrix} P_i(1, k) \\ \cdot \\ \cdot \\ \cdot \\ P_i(d, k) \end{bmatrix}, \; x_i$$

Node i calculates its virtual position for time k + 1 as shown in Algorithm 1 below. Additionally, the node holding beacon I hands it off as shown in Algorithm 2 below.

---

**Algorithm 1 Bourgain Embeddings**

1. Estimate proximities to beacons
   For $u = 1$ to $d$
   $$\text{Set } h_u = \frac{\sum_{j \in N_i} P_j(u,k) + P_i(u,k)}{|N_i + 1|}$$

2. Update position
   $$\text{Set } x_i^{k+1} = \left[ h_1, h_2, \ldots, h_d \right]$$

---

**Algorithm 2 Greedy Hand-off Algorithm**

1. Find potential new beacons
   Let $m = argmax_{n \in \{l, j \in N_i\}} min_{b \in \mathcal{B}(k) \setminus l} x_n^k(b)$,
   where $x_n^k(b)$ is the b-st component of $x_n^k$

2. Hand-off beacon
   If $m \neq l$
       pass beacon to node m
       Go to 1.

---

Algorithm 1 shown above will now be described in more detail.

Every node estimates its distance to the beacons as follows:

In a first step, for every beacon, a node considers that its distance to that beacon is the average of its distance to the beacon and the distance of its neighbours to the beacon. The distance metric may e.g. the number of hops which the beacon signal had to travel from the beacon node to the node whose coordinates are to be determined. So if the distance of a node to the first beacon is 10, and it has neighbours which have distances of 9,11 and 13 to the first beacon, this node will estimate its distance as (9+10+11+13)/4. It should be noted that the nodes take their freshest distances for the estimation (i.e. the distance obtained in the previous iteration). Distances to beacons are obtained when the beacons flood the network which may be performed in regular intervals.

In a second step the coordinates of a node are given by its estimated distances to beacons. So if there are 3 beacons, and a node has estimated the distances to the three beacons as 2.1, 3.55 and 7.99, the position of that node will be (2.1,3.55,7.99)

While Algorithm 1 as described above specifies that beacons are sent out sequentially in always the same order, this is not necessarily the case. Beacon nodes may also flood their beacons independently from other nodes and with their own specific beaconing frequency. The way nodes use their distance information about beacons can vary from Algorithm 1 and Algorithm 1 in this respect is just an example.

In order to guarantee that the beacon location remains stable and in turn the embedding remains stable there is provided according to one embodiment a hand-off procedure according to Algorithm 2 shown above which will now be described in more detail.

According to this embodiment beacon nodes hand-off their beacon role when they have a neighbor which fulfils certain conditions as given below:

As explained above, the coordinates of a node are given by its estimated distances to beacons. This means a beacon node has one of its coordinates which is the estimated distance to itself. Excluding the coordinate which corresponds to the distance to itself, a beacon l checks if it has a neighbor node which has a larger minimum distance to another beacon than its own minimum distance to another beacon.

In other words, beacon l calculates for each beacon other than itself the distance to this beacon. This may be done in just by calculating the Euclidean distance using the coordinates of the beacons. Among the thus resulting distances to the other beacons the one having the smallest value and the corresponding beacon V are selected. Then for the neighboring nodes of l (which are not beacons but just normal nodes) their distance to beacon V is calculated. If one of these nodes has a distance to beacon V which is larger than the distance of beacon l to beacon V this neighboring node is chosen to take over the beacon role from beacon l.

For that purpose the beacon l may send a message to the thus determined node (which has the largest minimum distance to other beacon V) and that node takes over the beacon role.

It should be noted that instead of taking the minimum distance, one could also look at another distance measure, e.g. the average distance or any other function of the distances to the other beacons. If there is a neighboring node for which the same distance measure yields a higher value this means that using this node as new beacon "expands" the overall structure of the beacons or "drives them away from each other". Such an effect, however, is highly preferable in terms of stability of the virtual coordinates and the embedding because it means that the "degree of linear independence" of the components of the beacon vectors increases.

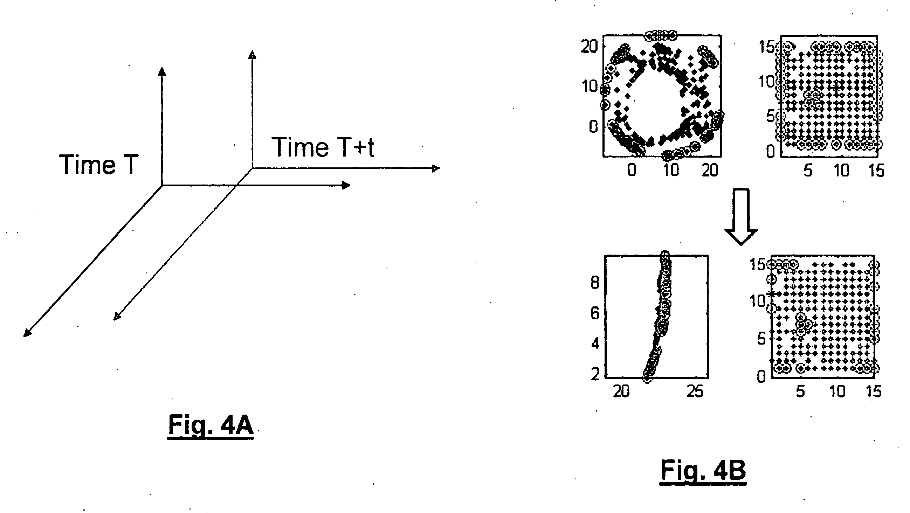

The beacon handoff procedure pushes beacons away from each other, and in this manner it ensures that the beacon signals originating from the beacons are as valuable for determining the virtual coordinates as possible. This will become more apparent from Figures 4A and 4B. Fig. 4A shows how a coordinate system shifts e.g. due to the mobility of nodes. Fig. 4B makes this effect even more apparent by illustrating how a node moves from the center to the edge of the network. Fig. 4B on the top right-hand side shows a node in the center and the beacons are shown around the perimeter of the network. This has the effect that the beacon coordinates in the virtual coordinate system are located as shown in the left-hand side in the upper part of Fig. 4B. However, if the node moves towards the edge as shown in the lower part on the right-hand side of Fig. 4B, this has the effect that the beacon coordinates are not lying anymore almost all in different directions but - rather to the opposite - lie almost on the same line (i.e. are almost completely linearly dependent). In such a case the beacon signals reaching the node which has moved towards the edge cannot give useful information anymore to determine the virtual coordinates.

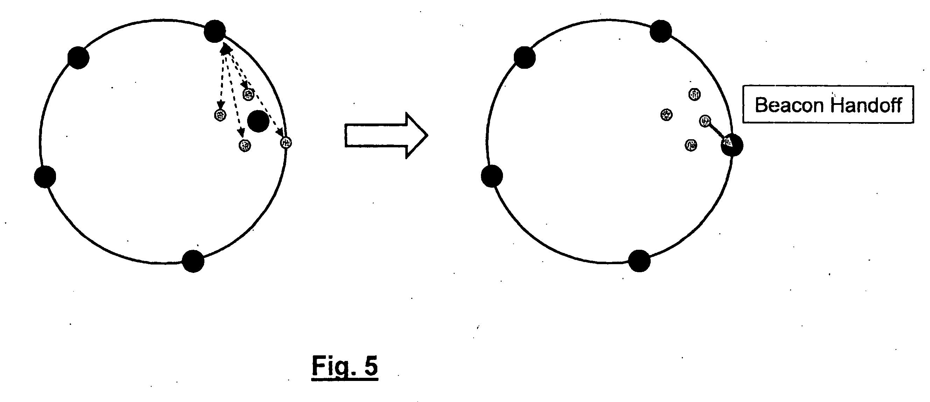

To avoid this situation the beacons are pushed away from each other as shown in Fig. 5. If the determination of the distance measure shows that the beacon is not anymore located on the perimeter of the network (as shown in the left-hand part of Fig. 4) another node which in this respect is better located is chosen as the new beacon which takes over the beacon role.

In order to avoid oscillating changes of node roles the handoff may only be performed if the distance difference between old and new beacon node exceeds a certain threshold.

It should be noted that the optimal number of beacons depends on the inherent dimensionality of the network (inhomogeneous topologies require more beacons), whereas the network dynamics determine the beaconing frequency. According to one embodiment the number of beacons is adapted to the quality of the embedding, as measured for example through the packet delivery ratio or the occurrence of dead-ends in the routing path. The number of beacons can for instance be increased if the quality of the routing goes below a given threshold. Similarly, the frequency with which beacon nodes flood beacon messages can be adapted to the amount by which the virtual coordinates change with each iteration (which depends on external parameters such as node mobility, but also on the convergence speed of the embedding algorithm). Finally, according to one embodiment beacon hand-offs do not need to take place every time the criterion in Algorithm 2 is fulfilled. Alternatively, in one embodiment it may be decided to hand-off when the condition is fulfilled several times, or depending on the stability of the coordinates of a node (i.e., how fast its neighborhood or virtual coordinate changes). In this case the handoff may not be executed if the neighborhood or virtual coordinate changes rapidly (beyond a threshold) because in this case the change of a beacon role may be counterproductive, in the sense that it leads to a less stable embedding.

In the following there will be explained a probabilistic beaconing approach where nodes try, given their proximity to anchor points and the positions of the anchor points, to optimally position themselves. At every iteration k, a randomly selected beacon $b_k$ floods the network with its virtual position $x_{bk}$. All other nodes in the network obtain their hop distance (=proximity) to $b_k$ this way. It should be noted that initially $x_{b0}$ may be a completely random d dimensional vector. The dimension d may be arbitrarily chosen, but a higher dimension (e.g. 3 or more, preferably more than 10) is preferable.

Nodes have a buffer in which they store their proximities to the b_buff last beacons as well as the positions of these beacons. One may call B(k) the set of the b_buff last beacons at time k (k denotes the number of the iteration) and $P_i(k - l)$ the proximity of node i and beacon k - l at time k - l. $x_{bk}$ as mentioned is the virtual position of the k-th last beacon indicated in d dimensions. The information stored by a node i at time k is its beacon vector $v_i$ (which comprises the proximities of node i to the last b_buff beacons in hops and the positions of the last b_buff beacons) and its virtual position which then may look as follows:

$$v_i = \begin{bmatrix} P_i(k) & x_{b_k} \\ \cdot & \cdot \\ \cdot & \cdot \\ \cdot & \cdot \\ P_i(k - b\_buff + 1) & x_{b_{k-b\_buff+1}} \end{bmatrix}, \; x_i$$

This information corresponds to the last b_buff beacon messages, whereas each of these b_buff beacon messages has been sent by a different beacon node which has been randomly chosen. As mentioned before, in each iteration a different beacon node is chosen randomly. The set of nodes which act as beacon nodes (and have a corresponding probability assigned for doing so) may comprise all nodes of the network or a subset of them. According to one embodiment there is a certain predefined probability with which each of the beacon nodes among the in total d beacon nodes may send a beacon message. The probability may be identical for all nodes, or there may be a probability distribution that is predetermined or generated on the fly, which prefers certain nodes, depending on the implementation.

The last b_buff beacon nodes which actually have sent beacons are used to calculate the positions of the nodes of the network, and with each iteration a new beacon node which has been randomly chosen is included in this set and another node of the set of b_buff nodes (e.g. the oldest one) is deleted from the set. Therefore one may say that beacon vector $v_i$ is a kind of sliding window containing information about the last b_buff beacon nodes which is used for calculating the virtual coordinates of the individual nodes of the network as will be described below.

Node i calculates its virtual position as shown in Algorithm 3 below where the parameter "*iteration*" is a user defined parameter determining the precision of the embedding. Note that these are local iterations using the same set of beacons and are different from the iterations that depend on the reception of a new beacon message. This "*iteration*" may e.g. be a fixed parameter (such as a fixed number of 3 iterations) or it may depend on some criterion like the amount by which the coordinates change with each further iteration. If there is no significant change anymore, the iterations may be aborted.

The algorithm first estimates the distance of the node to the beacons and then iteratively pushes or pulls the node in the direction of the beacons to fit the estimated proximities, progressively decreasing the "amplitude". It should be noted that estimating the proximities as the average of the proximities in a neighborhood is especially useful when nodes are mobile, since the known proximities might be outdated.

---

**Algorithm** 3 Probabilistic beaconing

1. Calculate starting point

$$\text{Set } x_{init} = \frac{\sum_{j \in \mathcal{N}_i} x_j^k + x_i^k}{|\mathcal{N}_i + 1|}$$

2. Estimate proximities to beacons

　　For $u = 0$ to $b\_buff$ - 1

$$\text{Set } \hat{h}_u = \frac{\sum_{j \in \mathcal{N}_i} P_j(k-u) + P_i(k-u)}{|\mathcal{N}_i + 1|}$$

　　end

3. Local optimization

　　For $\omega = 1$ to iteration

　　　　For $\upsilon = 0$ to $b\_buff$ - 1

$$\text{Set } x_{tmp}^\upsilon = x_{init} + \frac{\hat{h}_v - E_{x_{init} b_{k-v}}}{E_{x_{init} b_{k-v}}} \left( x_{init} - x_{b_{k-v}} \right)$$

　　　　end

$$x_{init} = \frac{1}{b\_buff} \sum_{j=0}^{b\_buff} x_{tmp}^j$$

　　end

4. Update position

$$\text{Set } x_i^{k+1} = x\_init$$

---

Algorithm 3 will now be explained in more detail.

It should be noted that in the probabilistic beaconing approach the coordinates of a node are not distances to beacons, or in other words, the number of beacons is not the same as the dimensionality of the coordinate system indicating the position of the nodes through virtual coordinates. However, the distances of the individual nodes to the beacons as well as the virtual coordinates of the beacons are used in the algorithm as will become apparent in the following. According to one embodiment all nodes perform the following steps (during iteration k which means that a new beacon has just been sent from the newly chosen beacon node):

(1) At the beginning of an iteration, a node calculates the average of its virtual position and the virtual position of its neighbors. This value will be the input to the push and pull algorithm. It should be noted that the averaging of the virtual position of a node with the ones of its neighbors is optional. It helps to cope with local reordering of nodes in the virtual coordinate system but is not essential for the probabilistic beaconing procedure. This step (1) is indicated by step 1. in Algorithm 3.

(2) Again, similar to Algorithm 1, a node estimates its distance to the beacons as the average of its own distance to the beacons and the distances of its neighbors to the beacons. The distance measure here is the number of hops. Also this averaging is optional, albeit preferable. This step is indicated by step 2. in Algorithm 3 shown above. It also resembles step 2. in Algorithm 1 shown before.

After steps (1) and (2) there are now for each node two types of position information, one being the beacon vector, i.e. the proximity measure to the individual beacons in numbers of hops, possibly averaged with the neighboring nodes, and the other one being the virtual coordinate of the node (and of the beacons) in d dimensions. Based on these two different position indications there are now inferred improved coordinates for each node based on the following step 3.

(3) Taking the position calculated in (1) as a starting point, a node calculates for every beacon the position to which it should move, on a straight line between its position and the position of the beacon, so that the Euclidean distance (the distance between the position of the beacon and its position) matches the distance estimated in (2). In other words, the two different distance indications (the coordinates and the beacon vector) are brought into agreement. While the Euclidean distance in the first iteration gives a completely wrong value (because the initial coordinates for the nodes were just arbitrarily chosen) the beaconing mechanism and the resulting beacon vector gives an indication to which extent the virtual coordinates are wrong. Assume for a node i that its Euclidean distance to beacon node l calculated based on the virtual coordinates of beacon node l is - just as an example - 3 and the corresponding distance measure given by the beacon vector (or better its component corresponding to beacon node l) of node i is 5 this means that the virtual coordinates of node i have to be amended such that the resulting Euclidean distance to beacon node l is 5.

The mathematical expression for this step 3. is given in 3. of Algorithm 3 above. One can see there that for each component v of the beacon vector (i.e. for v= 0 to b_buff-1) there is calculated the difference vector between the virtual coordinate of node i and the corresponding component of the beacon vector, i.e. the position of the beacon node corresponding to this component. This difference vector gives the direction into which the virtual coordinate of node i has to be shifted to bring it into accordance with the proximity measure obtained from the beacon signal. The amount by which the shift is to be performed (and by which this difference vector is multiplied) is given by the difference between the proximity measure $h_v$ indicated in the corresponding component of the beacon vector component and the Euclidean distance to beacon node v as obtained from the virtual coordinates of node i and beacon node v, normalized by the Euclidean distance. The resulting correction vector is then added to the starting vector $x_{init}$ with which the iteration has started (i.e., the starting coordinated of node i).

This results for each beacon node v (from 0 to b_buff-1) in a corrected vector $x_{tmp}$, and these vectors then are summed up and normalized by b_buff to obtain a new $X_{init}$ which then forms the starting coordinates x of node i for the next iteration k+1.

The input of the second iteration (step k+1) is then the average of these positions as already explained in connection with step 1, of Algorithm 3. Now in every subsequent step, a node again for every beacon calculates the point to which it should move on a straight line between the position calculated in the previous iteration and the positions of the beacons (as indicated by the beacon vector) to fit the estimated distances to the beacons. After a predefined number of steps (or another stopping criterion, such as: the error does not decrease sufficiently anymore), the algorithm stops. The new virtual position of a node is the output of the last iteration above.

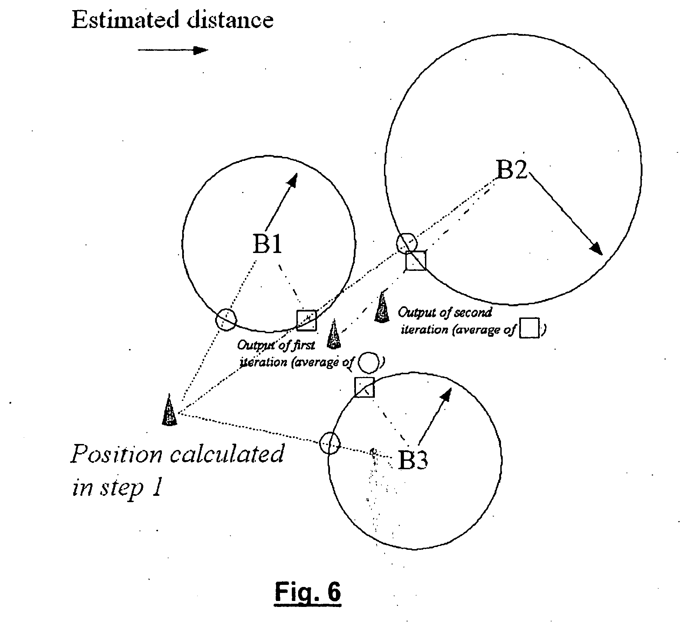

Figure 6 schematically illustrates the aforementioned algorithm with 3 beacons and virtual positions in 2 dimensions. The initial position shown in Fig. 6 is the position calculated in step (1) of Algorithm 3, i.e. the virtual coordinates of node i averaged with the coordinates of its neighbors. Based thereupon one can calculate the Euclidean distances to the beacon nodes B1, B2, and B3 which in the present iteration form the set of beacons. The Euclidean distance to the nodes B1, B2, and B3 is schematically illustrated in Fig. 6 by the distance between the initial position and the location of these nodes.

The circles around nodes B1, B2, and B3 schematically illustrate for each beacon node the proximity measure (in hops) as obtain by the beacon signals which were sent by these beacons, respectively. As mentioned already, the proximity measure may be averaged with the one of the neighboring nodes. The difference between the initial position of node i and the respective circles surrounding the beacon nodes now illustrates how the virtual coordinates of node i have to be shifted to bring them into accordance with the proximity measure. To correct the node i's position into the direction of beacon node B1 node i would have to be shifted into the direction of B1 to the point illustrated as small circle on the large circle surrounding B1. Similarly, into the direction of B2 node i would have to be shifted by an amount such that it is then located at the small circle shown on the large circle surrounding beacon node B2. And also into direction of B3 the node i would have to be shifted by such an amount that after the shift it would fall onto the small circle shown on the large circle surrounding B3.

This means that there are 3 resulting shift vectors, and these shift vectors (one for each beacon) are then summed up and yield a resulting shift vector which pushes the node i to the location labeled as "output of first iteration". The output position of the first iteration is the input to the second iteration etc. Then again in the next iteration the Euclidean differences to the beacons based on the new coordinates are calculated and it is once again tried to shift these coordinates such that they match or are in accordance with the proximity measure given in number of hops and obtained from the beacon signals. This results then in new desired positions as indicated by the squares located on the large circles surrounding the beacons and in corresponding correction vectors for each beacon. Again a resulting correction vector is determined and this results in a new coordinate of node i as indicated by "output of the second iteration" in Fig. 6.

Once this iteration procedure has converged or has been aborted (resulting in new coordinates for node i) the whole process starts a new iteration. One should note with care that we are speaking of two types of iterations, the one which was just described and which serves for obtaining a correction vector for the position of node i based on a given set of beacons. This may be referred to as the "small iteration" process because the beacon set remains the same during these iterations. Moreover, these iterations are actually optional in the sense that they further improve the already corrected new virtual coordinates which were obtained in the first one of these "small iterations". These "small iterations" are expressed in the mathematically shown Algorithm 3 above as parameter "iteration".

What may be referred to as "large iterations" and which was referred to before as "iteration k" or "iteration k+1" is the change of the beacon set in the next iteration k+1. Once the procedure as shown in Fig. 6 with beacons B1 to B3 has yielded a new coordinate x for node i, the beacon set is modified by incorporating a new beacon node into the beacon set. The new beacon node replaces an already existing beacon node in the beacon set, e.g. the eldest one, e.g. in Fig. 6 beacon B1 which is assumed to have entered the set before B2 and B3. B1 then is replaced by new beacon B4 (not shown in Fig. 6) which changes the sample of proximity measures (and beacon coordinates). In this way the whole procedure with each large iteration obtains information from a new and different part of the network which helps to improve the quality of the embedding (i.e. the virtual coordinates of the nodes).

It will be apparent to the skilled person that the change of the set of beacons and the incorporation of a new beacon not only helps to improve the convergence of the whole algorithm to obtain an accurate and stable embedding, but moreover, the regular change of the beacon set is particularly suitable to deal with the effect of the mobility of the nodes and changes in the network.

The incorporation of a new node into the beacon set may use any node of the network which is ready to send beacon signals and which was assigned a certain probability of becoming a beacon.
In practice, any node may initiate the flooding of a beacon with a certain probability p.

According to one embodiment, the number of beacons over time can be made adaptive to the quality and the stability of the embedding. This mechanism may be implemented by increasing probability p when the embedding quality is low and decreasing p when the quality is good (probability here may mean the probability within a certain amount of time, in other words the frequency). The quality of the embedding can be estimated by measuring the packet delivery ratio and by how much a single beaconing changes the virtual coordinates. The probability can according to one embodiment also depend on the density of the network, or on the distance to beacons.

With a p that is independent of the number of nodes, an increase or decrease in the network size would change the number of beacon messages over time. As mentioned above, the number of beacons should depend on the quality of the embedding rather than the number of nodes. According to one embodiment probability p may therefore be adapted to changes in the size of the network to make the overhead independent of the number of nodes (i.e., probability p is adapted in such a way that the average number of beacon messages over time does not change when the network size changes). Changes in network size can be inferred from the beaconing frequency in the network. A larger number of beacons may be indicative of a larger network and should therefore cause a decrease of probability p (and vice versa).

According to one embodiment the beaconing probability is increased for nodes far away from other beacons or for nodes close to the edge of the network or to obstacles. The same holds for traffic-based beaconing where traffic destinations send out beacons with higher probability. Since the embedding is usually "more accurate" around beacon nodes, such modifications lead to higher probability of routing success.

In the foregoing description, embodiments of the invention have been described in detail. In one of these embodiments there is provided a beacon hand-off procedure used to maintain beacons on the perimeter of the network and stabilize a virtual coordinate system under adversarial mobility and channel conditions. Used in combination with a beacon embedding algorithm and averaging to handle local disordering, this algorithm leads to very efficient routing in mobile networks. The message overhead is only dependent on the inherent dimensionality (complexity) of the connectivity graph and not its size while the success rate of greedy routing is much higher than with real coordinates.

According to another aspect there is provided a probabilistic beaconing scheme, in which a new beacon is chosen randomly at every iteration. Such a scheme guarantees robustness as it can deal with lost beacons. In particular, the dependence on a given set of beacons is removed. Similar to the approach of Fonseca et al., a very small number of beacon nodes flood the network periodically such that all other nodes learn their shortest path distance to the beacons. In contrast to Fonseca et al., however, the set of beacons changes continuously and not only in case a beacon fails. Rather, the set of beacons changes regularly and iteratively according to some predetermined manner, e.g. by randomly replacing one beacon in the set by a new beacon randomly chosen. This point is beneficial in mobile and uncertain environments as keeping the same set of beacons may lead to huge shifts in the coordinate system and subsequently to a very unstable coordinate system, inappropriate for routing. It should be noted, however, that the same effect (albeit maybe with somewhat less efficiency) may not only be achieved by randomly inserting new beacons into the set, but also by changing the set of beacons according to some predefined pattern. It is important to note that this approach can achieve a stable embedding based on any set of beacons as long as the beacon set regularly and iteratively changes its members.

Further, according to one embodiment instead of considering all beacons as independent distance information from several beacons, they are combined to reduce dimensionality and increase robustness. In other words, the $i^{th}$ coordinate of a node does not only depend on its distance to beacon i but is calculated based on the distances to all beacons. This procedure mitigates the effects of inaccurate measurements or of a message which was not received.

Calculating shortest path distances using beacons can e.g. be done as follows: a beacon node broadcasts a packet containing its identifier, a sequence number, and the hop count from the source (initially 0) to all its neighbors, who in turn rebroadcast this packet if this packet is seen for the first time or if they receive a copy with a lower hop count than the one they stored. Note that for Algorithm 3, also the virtual coordinate of the beacon node has to be included. The cost of a single flood is typically one packet per node. Furthermore, the local broadcasts can further be used as neighbor discovery messages, since all nodes must forward the packet at least once. The algorithms use (inaccurate past) distance estimates to roughly place nodes in the right area. The new beacons in one embodiment are randomly and independently chosen during execution (a new beacon is randomly chosen at every iteration). In this manner one can cope with past inaccurate distances in the way the distance information are combined from those randomly and independently picked beacons. One may say that this provides a new combination of a global "push and pull algorithm" with a local averaging algorithm. This combination of a local and a global component leads to excellent performance under the aforementioned adversarial conditions.

With the proposed routing schemes, a network remains operational under adverse conditions (e.g., high mobility, channel uncertainty). Route discovery and maintenance introduces a significantly lower overhead than comparable approaches. In this context, it is should be noted that the flooding by the beacon nodes is different from using floods in order to discover routes. The cost of a flood is perfectly acceptable if, independently of the size of the network and the data traffic, the number of messages per node remains small, whereas it may become much too large when a flood is necessary for every sent packet or new route. With the virtual coordinate scheme, the number of beacons that is necessary does not depend on the size of the network, but rather on the inherent dimensionality of the network. If for instance the network is isometrically embeddable in two dimensions, it is sufficient for all nodes, to know their distances to three beacon nodes in order to uniquely determine all other distances in the correct way, no matter how large the network is.

Of crucial importance when routing with positions is the stability of the coordinate system. The beacon hand-off procedure proposed according to the embodiments enables very efficient geographical routing as it first maintains beacons on the perimeter of the network, where they are more useful, and second stabilizes the coordinate system sufficiently to allow efficient routing under adversarial conditions such as node mobility and uncertain channels. One can use (adaptive) thresholds to avoid oscillations. A beacon node can for instance decide to only hand-off its beacon to a neighbor when this neighbor has fulfilled the hand-off criteria for a given time. Alternatively, a beacon node could decide to hand-off only when it has moved in the virtual space or when its neighbor set has changed. The beacon hand-off procedure does not add any overhead except for the passing of beacons, which is a very clear improvement over existing approaches.

Probabilistic beaconing then in turn is applicable when the embedding algorithm is not dependent on a specific set of beacons but rather all nodes (or a large set of nodes) can act as such. Existing approaches rely on a fixed set of beacons or require beacons to be at a particular location in the network (e.g., perimeter). New randomly chosen beacons at every iteration add robustness to our embedding schemes, as the loss of a particular beacon does only affect the global performance very marginally. Additionally, it is much less likely that randomly picked beacons will lead to an extremely bad embedding (good average performance), whereas the worst case with deterministically chosen beacons could yield poor results. This is especially true in inhomogeneous networks, where an unfortunate initial beacon selection could ruin the performance (e.g., one could select beacons in a poorly connected area of the network and all nodes in a dense area would obtain almost similar positions or would lose contact with the beacons if a link goes down). Storing and combining past but still useful distance information allows us to considerably reduce the communication overhead with respect to existing approaches which require complete and fresh distance information at every iteration, while not giving up on the success rate of the routing. The probability of choosing a node as a beacon can be uniform over all nodes or can depend on some properties of the nodes. One can make the beacon choice dependent on the position of the nodes, on the distance of a node to the beacon nodes, on time, on the density of the network around nodes, etc. The proposed embedding schemes efficiently maintain sufficiently good and stable embeddings under the aforementioned adversarial conditions to make greedy routing possible and advantageous at such a low overhead cost and in a distributed manner.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node in a network which is suitably programmed such that it is able to carry out an algorithm as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network which are programmed to operate in accordance with the routing mechanisms as described before.

## Claims

1.  A method of obtaining virtual coordinates for the nodes of an ad-hoc wireless network, said virtual coordinates being a representation of the location of the nodes of said network and said virtual coordinates being based on beacon signals which are sent from a set of beacon nodes in the network, said method comprising:

    using said beacon signals to determine a proximity measure being indicative of a proximity between a node receiving said beacon signal and the node which has sent said beacon signal;
    determining virtual coordinates of the nodes having received said beacons based on said proximity measure, wherein said method further comprises:

    regularly sending said beacon signals to update said virtual coordinates of said nodes, and
    replacing the nodes which are belonging to said set of beacon nodes and which are sending beacon messages by new nodes taking over the beacon role, whereas said replacement is performed regularly in accordance with a predefined replacement scheme to improve said determination of virtual coordinates,

    wherein said replacement scheme comprises:

    for a first beacon node in said set of beacon nodes, determining the distances of said first beacon node to the other beacon nodes in said set of beacon nodes according to some distance measure;
    selecting the beacon node for which the distance measure amount yielded the smallest value;
    calculate said distance measure to said selected beacon node for the neighboring nodes of said first beacon node;
    if for one of said neighboring nodes said distance measure amount is higher than the distance measure amount of said first beacon node, replacing said first beacon node in said set of beacon nodes by said neighboring node for which the distance measure yielded a higher value.

2.  The method of claim 1, comprising:

    choosing randomly an initial set of beacon nodes;
    determining the coordinates of the individual nodes in the network based on the distances to said beacon nodes which are respectively determined based on the number of hops which a beacon signal travels from a corresponding beacon node to said individual node;

determining said coordinates for all nodes in said network including said beacon nodes;
performing a replacement scheme comprising:

based on the thus determined coordinates, determine for a first beacon node the minimum distance to another beacon node and if a neighbouring node of said first beacon node yields a higher distance, replacing said first beacon node by said neighbouring node; and
repeating said replacement scheme for all of said beacon nodes in said set of beacon nodes.

3. The method of one of claims 1 to 2, further comprising:

performing said replacement of said beacon node only if one or more of the following conditions are fulfilled:

said distance difference lies beyond a certain threshold;
said distance difference remains present for a certain amount of time;
the beacon node which should be replaced has moved in the virtual space;
the neighbour set of the beacon node which should be replaced has changed.

4. The method of one of claims 1 to 3, further comprising:

choosing arbitrary virtual coordinates for the nodes and the beacon nodes of said network;
for a node in said network, determining for each of said beacon nodes in said set of beacon nodes a proximity measure indicating the distance of said node to each of said beacon nodes, respectively, based on the beacons sent by said beacon nodes;
determining a distance measure indicating the distance between said node and the beacon nodes for each beacon node in said set of beacon nodes based on said virtual coordinates;
for each beacon node in said set of beacon nodes, determining how much the virtual coordinates of said node have to be shifted into the direction of said beacon node to if the distance measure which is obtained based on the virtual coordinate and the proximity measure obtained based on the beacons sent by the beacon nodes should be in accordance after such a shift, the amount of shift corresponding to a correction vector for the virtual coordinates of said node;
determining the vector sum of the correction vectors and adding the resulting vector to the virtual coordinates of said node to obtain a corrected virtual coordinate to be used in the next iteration;
repeating the aforementioned steps in a next iteration using a new set of beacon nodes after having applied said replacement scheme.

5. The method of claim 4, wherein said replacement scheme comprises one of the following:

randomly choosing a new beacon node which replaces an existing beacon node in the set of beacon nodes based on the probability assigned to the nodes of the network indicating the probability with which a certain node may act as a beacon node;
choosing a new beacon node which replaces an existing beacon node in the set of beacon nodes based on a predefined order indicating the order in which individual nodes act as beacon nodes.

6. The method of claim 4 or 5, wherein
said proximity measure is based on the number of hops which a beacon travels from a beacon node to a node in the network;
said distance measure is based on the Euclidean distance calculated between a node in said network and a beacon node in said network based on their respective virtual coordinates.

7. The method of one of the preceding claims, wherein
proximity measures or distance measures are determined for individual nodes by averaging the value determined for an individual node with the value obtained for its neighbours.

8. The method of one of claims 4 to 7, wherein the likelihood of a node acting as a beacon node is adapted based on one or more of the following parameters:

the stability of the virtual coordinates;
the number of nodes in the network;

the location of the node with respect to beacon nodes;

9. A method for routing a message from a source to a destination through a network, said method comprising:

using the virtual coordinates which have been determined using a method according to one of claims 1 to 8 to determine a route for routing said packet from said source to said destination.

10. An apparatus for obtaining virtual coordinates for the nodes of an ad-hoc wireless network, said virtual coordinates being a representation of the location of the nodes of said network and said virtual coordinates being based on beacon signals which are sent from a set of beacon nodes in the network, said apparatus comprising:

a module for using said beacon signals to determine a proximity measure being indicative-of a proximity between a node receiving said beacon signal and the node which has sent said beacon signal;
a module for determining virtual coordinates of the nodes having received said beacons based on said proximity measure, wherein said method further comprises:

a module for regularly sending said beacon signals to update said virtual coordinates of said nodes, and
a module for replacing the nodes which are belonging to said set of beacon nodes and which are sending beacon messages by new nodes taking over the beacon node role, whereas said replacement is performed regularly in accordance with a predefined replacement scheme to improve said determination of virtual coordinates,

wherein said replacement scheme comprises:

for a first beacon node in said set of beacon nodes, determining the distances of said first beacon node to the other beacon nodes in said set of beacon nodes according to some distance measure;
selecting the beacon node for which the distance measure amount yielded the smallest value;
calculate said distance measure to said selected beacon node for the neighboring nodes of said first beacon node;
if for one of said neighboring nodes said distance measure amount is higher than the distance measure amount of said first beacon node, replacing said first beacon node in said set of beacon nodes by said neighboring node for which the distance measure yielded a higher value.

11. The apparatus of claim 10 , comprising:

a module for choosing randomly an initial set of beacon nodes;
a module for determining the coordinates of an individual node in the network based on the distance to said beacon nodes which are respectively determined based on the number of hops which a beacon signal travels from a corresponding beacon node to said individual node;
a module for determining said coordinates for all nodes in said network including said beacon nodes;
a module for performing a replacement scheme comprising:

based on the thus determined coordinates, determine for a first beacon node the minimum distance to another beacon node and if a neighbouring node of said first beacon node yields a higher distance, replacing said first beacon node by said neighbouring node; and
repeating said replacement scheme for all of said beacon nodes in said set of beacon nodes.

12. The apparatus of one of claims 10 to 11, further comprising:

a module for performing said replacement of said beacon node only if one or more of the following conditions are fulfilled:

said distance difference lies beyond a certain threshold;
said distance difference remains present for a certain amount of time;
the beacon node which should be replaced has moved in the virtual space;
the neighbour set of the beacon node which should be replaced has changed.

13. The apparatus of one of claims 10 to 12, further comprising:

a module for choosing arbitrary virtual coordinates for the nodes and the beacon nodes of said network;

a module for, for a node in said network, determining for each of said beacon nodes in said set of beacon nodes a proximity measure indicating the distance of said node to each of said beacon nodes, respectively, based on the beacons sent by said beacon nodes;

a module for determining a distance measure indicating the distance between said node and the beacon nodes for each beacon node in said set of beacon nodes based on said virtual coordinates;

a module for determining for each beacon node in said set of beacon nodes how much the virtual coordinates of said node have to be shifted into the direction of said beacon node to if the distance measure which is obtained based on the virtual coordinate and the proximity measure obtained based on the beacons sent by the beacon nodes should be in accordance after such a shift, the amount of shift corresponding to a correction vector for the virtual coordinates of said node;

a module for determining the vector sum of the correction vectors and adding the resulting vector to the virtual coordinates of said node to obtain a corrected virtual coordinate to be used in the next iteration;

a module for repeating the aforementioned steps in a next iteration using a new set of beacon nodes after having applied said replacement scheme.

14. The apparatus of claim 13, wherein said replacement scheme comprises one of the following:

randomly choosing a new beacon node which replaces an existing beacon node in the set of beacon nodes based on the probability assigned to the nodes of the network indicating the probability with which a certain node may act as a beacon node;

choosing a new beacon node which replaces an existing beacon node in the set of beacon nodes based on a predefined order indicating the order in which individual nodes act as beacon nodes.

15. The apparatus of claim 13 or 14, wherein

said proximity measure is based on the number of hops which a beacon travels from a beacon node to a node in the network;

said distance measure is based on the Euclidean distance calculated between a node in said network and a beacon node in said network based on their respective virtual coordinates.

16. The apparatus of one of claims 10 to 15, wherein

proximity measures or distance measures are determined for individual nodes by averaging the value determined for an individual node with the value obtained for its neighbours.

17. The apparatus of one of claims 13 to 16, wherein the likelihood of a node acting as a beacon node is adapted based on one or more of the following parameters:

the stability of the virtual coordinates;
the number of nodes in the network;
the location of the node with respect to beacon nodes;

18. An apparatus for routing a message from a source to a destination through an ad-hoc wireless network, said apparatus comprising:

a module for using the virtual coordinates which have been determined using an apparatus method according to one of claims 10 to 17 to determine a route for routing said packet from said source to said destination.

19. A computer program which when being executed on a computer enables said computer to carry out a method according to one of claims 1 to 9.

**Patentansprüche**

1. Verfahren zum Erhalten virtueller Koordinaten der Knoten eines drahtlosen Ad-hoc-Netzwerks, wobei die virtuellen Koordinaten eine Repräsentation des Orts der Knoten des Netzwerks darstellen und die virtuellen Kooridnaten auf Baken-Signalen basieren, die von einem Satz von Baken-Knoten in dem Netzwerk ausgesandt werden, wobei das Verfahren aufweist:

Verwenden der Baken-Signale, um ein Nähe-Maß zu bestimmen, das die Nähe zwischen einem Knoten, der das Baken-Signal erhält und dem Knoten, der das Baken-Signal ausgesandt hat, angibt;

Ermitteln von virtuellen Koordinaten der Knoten, die die Baken erhalten haben, basierend auf dem Nähe-Maß, wobei das Verfahren ferner aufweist:

regelmäßiges Senden der Baken-Signale, um die virtuellen Koordinaten der Knoten upzudaten, und Ersetzen derjenigen Knoten, die zu dem Satz von Baken-Knoten gehören und die Baken-Nachrichten aussenden durch neue Knoten, die die Baken-Rolle übernehmen, wobei das Ersetzen regelmäßig in Übereinstimmung mit einem vorbestimmten Ersetzungsschema ausgeführt wird, um die Bestimmung der virtuellen Koordinaten zu verbessern, wobei das Ersetzungsschema aufweist:

für einen ersten Baken-Knoten in dem Satz von Baken-Knoten, Ermitteln der Distanzen des ersten Baken-Knoten zu den anderen Baken-Knoten in dem Satz von Baken-Knoten gemäß einem Distanzmaß;

Auswählen des Baken-Knotens, für den der erhaltene Betrag des Distanzmaßes den geringsten Wert ergab;

Berechnen des Distanzmaßes zu dem ausgewählten Baken-Knoten für die Nachbarknoten des ersten Baken-Knotens;

falls für einen der Nachbarknoten der Betrag des Distanzmaßes größer ist als der Betrag des Distanzmaßes des ersten Baken-Knotens, Ersetzen des ersten Baken-Knotens in dem Satz von Baken-Knoten durch den Nachbarknoten, für den das Distanzmaß einen höheren Wert ergeben hat.

2. Verfahren nach Anspruch 1, aufweisend:

zufälliges Auswählen eines initialen Satzes von Baken-Knoten;

Ermitteln der Koordinaten der individuellen Knoten in dem Netzwerk basierend auf den Distanzen zu den Baken-Knoten, die jeweils ermittelt werden basierend auf der Anzahl von Sprüngen, die ein Baken-Signal von einem entsprechenden Baken-Knoten zu dem individuellen Knoten unterwegs ist;

Ermitteln der Koordinaten für alle Knoten in dem Netzwerk einschließlich der Baken-Knoten;

Durchführen eines Ersetzungsschemas, welches aufweist:

basierend auf den so ermittelten Koordinaten, Ermitteln der minimalen Distanz zu einem anderen Baken-Knoten für einen ersten Baken-Knoten und, falls ein Nachbarknoten des ersten Baken-Knotens eine größere Distanz ergibt, Ersetzen des ersten Baken-Knotens durch den Nachbarknoten; und

Wiederholen des Ersetzungsschemas für alle Baken-Knoten in dem Satz von Baken-Knoten.

3. Verfahren nach einem der Ansprüche 1 oder 2, ferner aufweisend:

Durchführen des Ersetzens des Baken-Knotens nur dann, wenn eine oder mehrere der folgenden Bedingungen erfüllt sind:

der Distanzunterschied liegt jenseits eines bestimmten Schwellwerts;

der Distanzunterschied bleibt für eine bestimmte Zeitdauer vorhanden;

der Baken-Knoten, der ersetzt werden soll, hat sich im virtuellen Raum bewegt;

der Nachbarsatz des Baken-Knotens, der ersetzt werden soll, hat sich geändert.

4. Verfahren nach einem der Ansprüche 1-3, ferner aufweisend:

Auswählen von beliebigen virtuellen Koordinaten für die Knoten und die Baken-Knoten des Netzwerks;

für einen Knoten in dem Netzwerk, Ermitteln eines Nähe-Maßes für jeden der Baken-Knoten in dem Satz von Baken-Knoten, welches die Distanz des Knotens zu jeweils jedem der Baken-Knoten angeibt, und zwar basierend auf den von den Baken-Knoten ausgesandten Baken;

Ermitteln eines Distanzmaßes, welches die Distanz zwischen dem Knoten und den Baken-Knoten für jeden Baken-Knoten in dem Satz von Baken-Knoten angibt, und zwar basierend auf den virtuellen Koordinaten;

für jeden Baken-Knoten in dem Satz von Baken-Knoten, Ermitteln um wie viel die virtuellen Koordinaten des Knotens in Richtung des Baken-Knotens verschoben werden müssen, falls das Distanzmaß, das basierend auf den virtuellen Koordinaten erhalten wird und das Nähe-Maß, das basierend auf den Baken, die von den Baken-Knoten ausgesandt werden, erhalten wird, nach einer solchen Verschiebung in Übereinstimmung sein sollen, wobei der Betrag der Verschiebung einem Korrekturvektor für die virtuellen Koordinaten des Knotens enspricht;

Ermitteln der Vektorsumme des Korrekturvektors und Addieren des resultierenden Vektors zu den virtuellen Koordinaten des Knotens, um eine korrigierte virtuelle Koordinate zu erhalten, die in der nächsten Iteration verwendet wird;

Wiederholen der vorgenannten Schritte in einer nächsten Iteration unter Verwendung eines neuen Satzes von Baken-Knoten, nachdem das Ersetzungsschema angewendet wurde.

5. Verfahren nach Anspruch 4, wobei das Ersetzungsschema eines der folgenden aufweist:

zufälliges Auswählen eines neuen Baken-Knotens, der einen existierenden Baken-Knoten in dem Satz von Baken-Knoten ersetzt, und zwar basierend auf der Wahrscheinlichkeit, die den Knoten des Netzwerks zugewiesen ist und die Wahrscheinlichkeit angibt, mit der ein bestimmter Knoten als Baken-Knoten agiert;

Auswählen eines neuen Baken-Knotens, der einen existierenden Baken-Knoten in dem Satz von Baken-Knoten ersetzt basierend auf einer vordefinierten Reihenfolge, die die Reihenfolge angibt, in der individuelle Knoten als Baken-Knoten agieren.

6. Verfahren nach Anspruch 4 oder 5, wobei

das Nähe-Maß basiert auf der Anzahl von Sprüngen, die ein Baken unterwegs ist von einem Baken-Knoten zu einem Knoten in dem Netzwerk;

das Distanzmaß basiert auf der euklidischen Distanz berechnet zwischen einem Knoten in dem Netzwerk und einem Baken-Knoten in dem Netzwerk basierend auf ihren jeweiligen virtuellen Koordinaten.

7. Verfahren nach einem der vorhergehenden Ansprüche, wobei

Nähe-Maße oder Distanzmaße für individuelle Knoten ermittelt werden, indem der Mittelwert aus dem für einen individuellen Knoten ermittelten Wert und dem für seine Nachbarn erhaltenen Wert gebildet wird.

8. Verfahren nach einem der Ansprüche 4-7, wobei die Wahrscheinlichkeit, mit der ein Knoten als Baken-Knoten agiert angepasst wird basierend auf einem oder mehreren der vorhergehenden Parameter:

der Stabilität der virtuellen Koordinaten;

der Anzahl von Knoten in dem Netzwerk;

dem Ort des Knotens bzgl. der Baken-Knoten.

9. Verfahren zum Leiten einer Nachricht von einer Quelle zu einem Ziel durch ein Netzwerk, wobei das Verfahren aufweist:

Verwenden der virtuellen Koordinaten, die ermittelt wurden unter Verwendung eines Verfahrens gemäß einem der Ansprüche 1 - 8, um einen Weg zum Leiten des Pakets von der Quelle zu dem Ziel zu ermitteln.

10. Vorrichtung zum Erhalten vo virtuellen Koordinaten für die Knoten eines drahtlosen Ad-Hoc-Netzwerks, wobei die virtuellen Kooridnaten eine Repräsentation des Orts der Knoten des Netzwerks darstellen und die virtuellen Kooridnaten auf Baken-Sighalen basieren, die von einem Satz von Baken-Knoten in dem Netzwerk ausgesandt werden, wobei die Vorrichtung aufweist:

ein Modul zum Verwenden der Baken-Signale, um ein Nähe-Maß zu bestimmen, das die Nähe zwischen einem Knoten, der das Baken-Signal erhält und dem Knoten, der das Baken-Signal ausgesandt hat, angibt;

ein Modul zum Ermitteln von virtuellen Koordinaten der Knoten, die die Baken erhalten haben, basierend auf dem Nähe-Maß, wobei das Verfahren ferner aufweist:

ein Modul zum regelmäßigen Senden der Baken-Signale, um die virtuellen Koordinaten der Knoten upzudaten, und

ein Modul zum Ersetzen derjenigen Knoten, die zu dem Satz von Baken-Knoten gehören und die Baken-Nachrichten aussenden durch neue Knoten, die die Baken-Rolle übernehmen, wobei das Ersetzen regelmäßig in Übereinstimmung mit einem vorbestimmten Ersetzungsschema ausgeführt wird, um die Bestimmung der virtuellen Koordinaten zu verbessern, wobei das Ersetzungsschema aufweist:

für einen ersten Baken-Knoten in dem Satz von Baken-Knoten, Ermitteln der Distanzen des ersten Baken-Knoten zu den anderen Baken-Knoten in dem Satz von Baken-Knoten gemäß einem Distanzmaß;

ein Modul zum Auswählen des Baken-Knotens, für den der erhaltene Betrag des Distanzmaßes den geringsten Wert ergab;

ein Modul zum Berechnen des Distanzmaßes zu dem ausgewählten Baken-Knoten für die Nachbarknoten des ersten Baken-Knotens;

falls für einen der Nachbarknoten der Betrag des Distanzmaßes größer ist als der Betrag des Distanzmaßes des ersten Baken-Knotens, Ersetzen des ersten Baken-Knotens in dem Satz von Baken-Knoten durch den Nachbarknoten, für den das Distanzmaß einen höheren Wert ergeben hat.

**11.** Vorrichtung nach Anspruch 10, aufweisend:

ein Modul zum zufälligen Auswählen eines initialen Satzes von Baken-Knoten;

ein Modul zum Ermitteln der Koordinaten der individuellen Knoten in dem Netzwerk basierend auf den Distanzen zu den Baken-Knoten, die jeweils ermittelt werden basierend auf der Anzahl von Sprüngen, die ein Baken-Signal von einem entsprechenden Baken-Knoten zu dem individuellen Knoten unterwegs ist;

ein Modul zum Ermitteln der Koordinaten für alle Knoten in dem Netzwerk einschließlich der Baken-Knoten;

ein Modul zum Durchführen eines Ersetzungsschemas, welches aufweist:

basierend auf den so ermittelten Koordinaten, Ermitteln der minimalen Distanz zu einem anderen Baken-Knoten für einen ersten Baken-Knoten und, falls ein Nachbarknoten des ersten Baken-Knotens eine größere Distanz ergibt, Ersetzen des ersten Baken-Knotens durch den Nachbarknoten; und

Wiederholen des Ersetzungsschemas für alle Baken-Knoten in dem Satz von Baken-Knoten.

**12.** Vorrichtung nach einem der Ansprüche 10 oder 11, ferner aufweisend:

ein Modul zum Durchführen des Ersetzens des Baken-Knotens nur dann, wenn eine oder mehrere der folgenden Bedingungen erfüllt sind:

der Distanzunterschied liegt jenseits eines bestimmten Schwellwerts;

der Distanzunterschied bleibt für eine bestimmte Zeitdauer vorhanden;

der Baken-Knoten, der ersetzt werden soll, hat sich im virtuellen Raum bewegt;

der Nachbarsatz des Baken-Knotens, der ersetzt werden soll, hat sich geändert.

**13.** Vorrichtung nach einem der Ansprüche 10-12, ferner aufweisend:

ein Modul zum Auswählen von beliebigen virtuellen Koordinaten für die Knoten und die Baken-Knoten des Netzwerks;

ein Modul zum, für einen Knoten in dem Netzwerk, Ermitteln für jeden der Baken-Knoten in dem Satz von Baken-Knoten eines Nähe-Maßes, welches die Distanz des Knotens zu jeweils jedem der Baken-Knoten angeibt, und zwar basierend auf den von den Baken-Knoten ausgesandten Baken;

ein Modul zum Ermitteln eines Distanzmaßes, welches die Distanz zwischen dem Knoten und den Baken-Knoten für jeden Baken-Knoten in dem Satz von Baken-Knoten angibt, und zwar basierend auf den virtuellen Koordinaten;

für jeden Baken-Knoten in dem Satz von Baken-Knoten, Ermitteln um wie viel die virtuellen Koordinaten des Knotens in Richtung des Baken-Knotens verschoben werden müssen, falls das Distanzmaß, das basierend auf den virtuellen Koordinaten erhalten wird und das Nähe-Maß, das basierend auf den Baken, die von den Baken-Knoten ausgesandt werden, erhalten wird, nach einer solchen Verschiebung in Übereinstimmung sein sollen, wobei der Betrag der Verschiebung einem Korrekturvektor für die virtuellen Koordinaten des Knotens enspricht;

ein Modul zum Ermitteln der Vektorsumme des Korrekturvektors und Addieren des resultierenden Vektors zu den virtuellen Koordinaten des Knotens, um eine korrigierte virtuelle Koordinate zu erhalten, die in der nächsten Iteration verwendet wird;

ein Modul zum Wiederholen der vorgenannten Schritte in einer nächsten Iteration unter Verwendung eines neuen Satzes vo Baken-Knoten, nachdem das Ersetzungsschema angewendet wurde.

**14.** Vorrichtung nach Anspruch 13, wobei das Ersetzungsschema eines der folgenden aufweist:

zufälliges Auswählen eines neuen Baken-Knotens, der einen existierenden Baken-Knoten in dem Satz von Baken-Knoten ersetzt, und zwar basierend auf der Wahrscheinlichkeit, die den Knoten des Netzwerks zugewiesen ist und die Wahrscheinlichkeit angibt, mit der ein bestimmter Knoten als Baken-Knoten agiert;

Auswählen eines neuen Baken-Knotens, der einen existierenden Baken-Knoten in dem Satz von Baken-Knoten ersetzt basierend auf einer vordefinierten Reihenfolge, die die Reihenfolge angibt, in der individuelle Knoten als Baken-Knoten agieren.

15. Vorrichtung nach Anspruch 13 oder 14, wobei

das Nähe-Maß basiert auf der Anzahl von Sprüngen, die ein Baken unterwegs ist von einem Baken-Knoten zu einem Knoten in dem Netzwerk;

das Distanzmaß basiert auf der euklidischen Distanz berechnet zwischen einem Knoten in dem Netzwerk und einem Baken-Knoten in dem Netzwerk basierend auf ihren jeweiligen virtuellen Koordinaten.

16. Vorrichtung nach einem der Ansprüche 10 - 15, wobei

Nähe-Maße oder Distanzmaße für individuelle Knoten ermittelt werden, indem der Mittelwert aus dem für einen individuellen Knoten ermittelten Wert und dem für seine Nachbarn erhaltenen Wert gebildet wird.

17. Vorrichtung nach einem der Ansprüche 13 - 16, wobei

die Wahrscheinlichkeit, mit der ein Knoten als Baken-Knoten agiert angepasst wird basierend auf einem oder mehreren der vorhergehenden Parameter:

der Stabilität der virtuellen Koordinaten;
der Anzahl von Knoten in dem Netzwerk;
dem Ort des Knotens bzgl. der Baken-Knoten.

18. Vorrichtung zum Leiten einer Nachricht von einer Quelle zu einem Ziel durch ein drahtloses Ad-Hoc-Netzwerk, wobei die Vorrichtung aufweist:

ein Modul zum Verwenden der virtuellen Koordinaten, die ermittelt wurden unter Verwendung einer Vorrichtung gemäß einem der Ansprüche 10 - 17, um einen Weg zum Leiten des Pakets von der Quelle zu dem Ziel zu ermitteln.

19. Computerprogramm, das, wenn es auf einem Computer ausgeführt wird, den Computer in die Lage versetzt, ein Verfahren gemäß einem der Ansprüche 1 - 9 auszuführen.

**Revendications**

1. Procédé pour obtenir des coordonnées virtuelles pour les noeuds d'un réseau sans fil ad hoc, lesdites coordonnées virtuelles étant une représentation du positionnement des noeuds dudit réseau et lesdites coordonnées virtuelles étant fondées sur des signaux de balise qui sont envoyés à partir d'un jeu de noeuds de balise dans le réseau, ledit procédé comprenant les étapes consistant à :

utiliser lesdits signaux de balise pour déterminer une mesure de proximité indicative d'une proximité entre un noeud recevant ledit signal de balise et le noeud qui a envoyé ledit signal de balise ;
déterminer des coordonnées virtuelles des noeuds ayant reçu lesdites balises sur la base de ladite mesure de proximité, dans lequel ledit procédé comprend en outre les étapes consistant à :

envoyer régulièrement lesdits signaux de balise pour mettre à jour lesdites coordonnées virtuelles desdits noeuds, et
remplacer les noeuds qui appartiennent audit jeu de noeuds de balise et qui envoient des messages de balise par des nouveaux noeuds reprenant le rôle de balise, alors que ledit remplacement est réalisé régulièrement conformément à un plan de remplacement prédéfini pour améliorer ladite détermination de coordonnées virtuelles,

dans lequel ledit plan de remplacement comprend les étapes consistant à :

pour un premier noeud de balise dans ledit jeu de noeuds de balise, déterminer les distances dudit premier noeud de balise jusqu'aux autres noeuds de balise dans ledit jeu de noeuds de balise selon une certaine mesure de distance ;

sélectionner le noeud de balise pour lequel la quantité de mesure de distance a produit la valeur la moins importante ;

calculer ladite mesure de distance jusqu'audit noeud de balise sélectionné pour les noeuds voisins dudit premier noeud de balise ;

si, pour un desdits noeuds voisins, ladite quantité de mesure de distance est supérieure à la quantité de mesure de distance dudit premier noeud de balise, remplacer ledit premier noeud de balise dans ledit jeu de noeuds de balise par ledit noeud voisin pour lequel la mesure de distance a produit une valeur plus importante.

2. Procédé selon la revendication 1, comprenant les étapes consistant à :

choisir aléatoirement un jeu initial de noeuds de balise :

déterminer les coordonnées des noeuds individuels dans le réseau sur la base des distances jusqu'auxdits noeuds de balise qui sont respectivement déterminées sur la base du nombre de bonds selon lesquels un signal de balise se déplace à partir d'un noeud de balise correspondant jusqu'audit noeud individuel ;

déterminer lesdites coordonnées pour tous les noeuds dans ledit réseau, y compris lesdits noeuds de balise ;

réaliser un plan de remplacement comprenant les étapes consistant à :

sur la base des coordonnées ainsi déterminées, déterminer, pour un premier noeud de balise, la distance minimum jusqu'à un autre noeud de balise et, si un noeud voisin dudit premier noeud de balise produit une distance plus importante, remplacer ledit premier noeud de balise par ledit noeud voisin ; et

répéter ledit plan de remplacement pour tous lesdits noeuds de balise dans ledit jeu de noeuds de balise.

3. Procédé selon l'une des revendications 1 à 2, comprenant en outre les étapes consistant à :

réaliser ledit remplacement dudit noeud de balise seulement si une ou plusieurs des conditions suivantes sont remplies :

la différence de distance se trouve au-delà d'un certain seuil ;

la différence de distance reste présente pendant une certaine durée ;

le noeud de balise qui doit être remplacé s'est déplacé dans l'espace virtuel ;

le jeu voisin du noeud de balise qui doit être remplacé a changé.

4. Procédé selon l'une des revendications 1 à 3, comprenant en outre les étapes consistant à :

choisir arbitrairement des coordonnées virtuelles pour les noeuds et les noeuds de balise dudit réseau ;

pour un noeud dans ledit réseau, déterminer, pour chacun desdits noeuds de balise dans ledit jeu de noeuds de balise, une mesure de proximité indiquant la distance dudit noeud jusqu'à chacun desdits noeuds de balise, respectivement, sur la base des balises envoyées par lesdits noeuds de balise ;

déterminer une mesure de distance indiquant la distance entre ledit noeud et les noeuds de balise pour chaque noeud de balise dans ledit jeu de noeuds de balise sur la base desdites coordonnées virtuelles ;

pour chaque noeud de balise dans ledit jeu de noeuds de balise, déterminer la quantité selon laquelle les coordonnées virtuelles dudit noeud doivent être déplacées dans la direction dudit noeud de balise si la mesure de distance qui est obtenue sur la base de la coordonnée virtuelle et la mesure de proximité obtenue sur la base des balises envoyées par les noeuds de balise doivent être conformes après un tel déplacement, la quantité de déplacement correspondant à un vecteur de correction pour les coordonnées virtuelles dudit noeud ;

déterminer la somme vectorielle des vecteurs de correction et ajouter le vecteur résultant aux coordonnées virtuelles dudit noeud pour obtenir une coordonnée virtuelle corrigée destinée à être utilisée dans l'itération suivante ;

répéter les étapes susmentionnées dans une itération suivante en utilisant un nouveau jeu de noeuds de balise après avoir appliqué ledit plan de remplacement.

5. Procédé selon la revendication 4, dans lequel ledit plan de remplacement comprend une des étapes suivantes consistant à :

choisir aléatoirement un nouveau noeud de balise qui remplace un noeud de balise existant dans le jeu de noeuds de balise sur la base de la probabilité attribuée aux noeuds du réseau indiquant la probabilité avec laquelle un certain noeud peut servir de noeud de balise ;

choisir un nouveau noeud de balise qui remplace un noeud de balise existant dans le jeu de noeuds de balise sur la base d'un ordre prédéfini indiquant l'ordre dans lequel des noeuds individuels servent de noeuds de balise.

**6.** Procédé selon la revendication 4 ou 5, dans lequel :

ladite mesure de proximité est fondée sur le nombre de bonds selon lesquels une balise se déplace à partir d'un noeud de balise jusqu'à un noeud dans le réseau ;

ladite mesure de distance est fondée sur la distance euclidienne calculée entre un noeud dans ledit réseau et un noeud de balise dans ledit réseau sur la base de leurs coordonnées virtuelles respectives.

**7.** Procédé selon une des revendications précédentes, dans lequel :

des mesures de proximité ou des mesures de distance sont déterminées pour des noeuds individuels en faisant la moyenne de la valeur déterminée pour un noeud individuel avec la valeur obtenue pour ses voisins.

**8.** Procédé selon l'une des revendications 4 à 7, dans lequel la vraisemblance d'un noeud servant de noeud de balise est adaptée sur la base d'un ou plusieurs des paramètres suivants :

la stabilité des coordonnées virtuelles ;
le nombre de noeuds dans le réseau ;
le positionnement du noeud par rapport à des noeuds de balise.

**9.** Procédé pour acheminer un message à partir d'une source jusqu'à à une destination à travers un réseau, ledit procédé comprenant l'étape consistant à :

utiliser les coordonnées virtuelles qui ont été déterminées en utilisant un procédé selon une des revendications 1 à 8 pour déterminer un chemin pour acheminer ledit paquet à partir de ladite source jusqu'à ladite destination.

**10.** Appareil pour obtenir des coordonnées virtuelles pour les noeuds d'un réseau sans fil ad hoc, lesdites coordonnées virtuelles étant une représentation du positionnement des noeuds dudit réseau et lesdites coordonnées virtuelles étant fondées sur des signaux de balise qui sont envoyés à partir d'un jeu de noeuds de balise dans le réseau, ledit appareil comprenant :

un module destiné à utiliser lesdits signaux de balise pour déterminer une mesure de proximité indicative d'une proximité entre un rioeud recevant ledit signal de balise et le noeud qui a envoyé ledit signal de balise ;

un module destiné à déterminer des coordonnées virtuelles des noeuds ayant reçu lesdites balises sur la base de ladite mesure de proximité, dans lequel ledit procédé comprend en outre :

un module destiné à envoyer régulièrement lesdits signaux de balise pour mettre à jour lesdites coordonnées virtuelles desdits noeuds, et

un module destiné à remplacer les noeuds qui appartiennent audit jeu de noeuds de balise et qui envoient des messages de balise par des nouveaux noeuds reprenant le rôle de noeud de balise, alors que ledit remplacement est réalisé régulièrement conformément à un plan de remplacement prédéfini pour améliorer ladite détermination de coordonnées virtuelles,

dans lequel ledit plan de remplacement comprend les étapes consistant à :

pour un premier noeud de balise dans ledit jeu de noeuds de balise, déterminer les distances dudit premier noeud de balise jusqu'aux autres noeuds de balise dans ledit jeu de noeuds de balise selon une certaine mesure de distance :

sélectionner le noeud de balise pour lequel la quantité de mesure de distance a produit la valeur la moins importante ;

calculer ladite mesure de distance jusqu'audit noeud de balise sélectionné pour les noeuds voisins dudit premier noeud de balise ;

si, pour un desdits noeuds voisins, ladite quantité de mesure de distance est supérieure à la quantité de mesure de distance dudit premier noeud de balise, remplacer ledit premier noeud de balise dans ledit jeu de noeuds de balise par ledit noeud voisin pour lequel la mesure de distance a produit une valeur plus importante.

**11.** Appareil selon la revendication 10, comprenant :

un module destiné à choisir aléatoirement un jeu initial de noeuds de balise ;
un module destiné à déterminer les coordonnées d'un noeud individuel dans le réseau sur la base de la distance jusqu'auxdits noeuds de balise, qui sont respectivement déterminées sur la base du nombre de bonds selon lesquels un signal de balise se déplace à partir d'un noeud de balise correspondant jusqu'audit noeud individuel ;
un module destiné à déterminer lesdites coordonnées pour tous les noeuds dans ledit réseau, y compris lesdits noeuds de balise ;
un module destiné à réaliser un plan de remplacement comprenant les étapes consistant à :

sur la base des coordonnées ainsi déterminées, déterminer, pour un premier noeud de balise, la distance minimum jusqu'à un autre noeud de balise et, si un noeud voisin dudit premier noeud de balise produit une distance plus importante, remplacer ledit premier noeud de balise par ledit noeud voisin ; et
répéter ledit plan de remplacement pour tous lesdits noeuds de balise dans ledit jeu de noeuds de balise.

**12.** Appareil selon l'une des revendications 10 à 11, comprenant en outre :

un module destiné à réaliser ledit remplacement dudit noeud de balise seulement si une ou plusieurs des conditions suivantes sont remplies :

la différence de distance se trouve au-delà d'un certain seuil ;
la différence de distance reste présente pendant une certaine durée ;
le noeud de balise qui doit être remplacé s'est déplacé dans l'espace virtuel ;
le jeu voisin du noeud de balise qui doit être remplacé a changé.

**13.** Appareil selon l'une des revendications 10 à 12, comprenant en outre :

un module destiné à choisir arbitrairement des coordonnées virtuelles pour les noeuds et les noeuds de balise dudit réseau ;
un module destiné à, pour un noeud dans ledit réseau, déterminer, pour chacun desdits noeuds de balise dans ledit jeu de noeuds de balise, une mesure de proximité indiquant la distance dudit noeud jusqu'à chacun desdits noeuds de balise, respectivement, sur la base des balises envoyées par lesdits noeuds de balise ;
un module destiné à déterminer une mesure de distance indiquant la distance entre ledit noeud et les noeuds de balise pour chaque noeud de balise dans ledit jeu de noeuds de balise sur la base desdites coordonnées virtuelles ;
un module destiné à déterminer, pour chaque noeud de balise dans ledit jeu de noeuds de balise, la quantité selon laquelle les coordonnées virtuelles dudit noeud doivent être déplacées dans la direction dudit noeud de balise si la mesure de distance qui est obtenue sur la base de la coordonnée virtuelle et la mesure de proximité obtenue sur la base des balises envoyées par les noeuds de balise doivent être conformes après un tel déplacement, la quantité de déplacement correspondant à un vecteur de correction pour les coordonnées virtuelles dudit noeud ;
un module destiné à déterminer la somme vectorielle des vecteurs de correction et ajouter le vecteur résultant aux coordonnées virtuelles dudit noeud pour obtenir une coordonnée virtuelle corrigée destinée à être utilisée dans l'itération suivante ;
un module destiné à répéter les étapes susmentionnées dans une itération suivante en utilisant un nouveau jeu de noeuds de balise après avoir appliqué ledit plan de remplacement.

**14.** Appareil selon la revendication 13, dans lequel ledit plan de remplacement comprend une des étapes suivantes consistant à :

choisir aléatoirement un nouveau noeud de balise qui remplace un noeud de balise existant dans le jeu de noeuds de balise sur la base de la probabilité attribuée aux noeuds du réseau indiquant la probabilité avec laquelle un certain noeud peut servir de noeud de balise ;

choisir un nouveau noeud de balise qui remplace un noeud de balise existant dans le jeu de noeuds de balise sur la base d'un ordre prédéfini indiquant l'ordre dans lequel noeuds individuels servent de noeuds de balise.

15. Appareil selon la revendication 13 ou 14, dans lequel :

ladite mesure de proximité est fondée sur le nombre de bonds selon lesquels une balise se déplace à partir d'un noeud de balise jusqu'à un noeud dans le réseau ;
ladite mesure de distance est fondée sur la distance euclidienne calculée entre un noeud dans ledit réseau et un noeud de balise dans ledit réseau sur la base de leurs coordonnées virtuelles respectives.

16. Appareil selon l'une des revendications 10 à 15, dans lequel :

des mesures de proximité ou mesures de distance sont déterminées pour des noeuds individuels en faisant la moyenne de la valeur déterminée pour un noeud individuel avec la valeur obtenue pour ses voisins.

17. Appareil selon l'une des revendications 13 à 16, dans lequel la vraisemblance d'un noeud servant de noeud de balise est adaptée sur la base d'un ou plusieurs des paramètres suivants :

la stabilité des coordonnées virtuelles ;
le nombre de noeuds dans le réseau ;
le positionnement du noeud par rapport à des noeuds de balise.

18. Appareil pour acheminer un message à partir d'une source jusqu'à une destination à travers un réseau sans fil ad hoc, ledit appareil comprenant :

un module destiné à utiliser les coordonnées virtuelles qui ont été déterminées en utilisant un appareil selon une des revendications 10 à 17 pour déterminer un chemin pour acheminer ledit paquet à partir de ladite source jusqu'à ladite destination.

19. Programme informatique qui, lorsqu'il est exécuté sur un ordinateur, permet à l'ordinateur de réaliser un procédé selon une des revendications 1 à 9.

**Fig. 1**

**Fig. 2B**

**Fig. 2A**

26

Wall

B,F close geographically
but 3 hops apart

A    B    F

C

E    G

D

Real Coordinates

Far apart virtually
and 3 hops apart

A    B    F

C    E

D    G

Virtual Coordinates

**Fig. 3**

EP 1 883 185 B1

Fig. 4B

Fig. 4A

Beacon Handoff

Fig. 5

Estimated distance

→

B2

B1

Output of second
iteration (average of ☐)

Output of first
iteration (average of ◯)

B3

Position calculated
in step 1

<u>**Fig. 6**</u>

EP 1 883 185 B1

## REFERENCES CITED IN THE DESCRIPTION

**Non-patent literature cited in the description**

- **C. E. PERKINS ; P. BHAGWAT.** Highly dynamic destination-sequenced distance-vector routing (DSDV) for mobile computers. *ACM SIGCOMM,* 1994, vol. 94, 234-244
- **T. CLAUSEN ; P. JACQUET ; A. LAOUITI ; P. MUHLETHALER ; A. QAYYUM ; L. VIENNOT.** Optimized link state routing protocol. *IEEE INMIC,* 2001
- **G.G. FINN.** *Routing and addressing problems in large metropolitan-scale internetworks,* March 1987
- **P. BOSE ; P. MORIN ; I. STOJMENOVIC ; J. UR-RUTIA.** *Routing with guaranteed delivery in ad hoc wireless networks,* November 2001
- **S. CAPKUN ; M. HAMDI ; J. HUBAUX.** Proceedings of the 34th Annual Hawaii International Conference on System Sciences. *GPS-Free Positioning in Mobile ad-hoc Networks,* 2001

- **A. RAO ; S. RATNASAMY ; C. PAPADIMITRIOU ; S. SHENKER ; I. STOICA.** Geographic routing without location information, Proceedings of the Annual International Conference on Mobile Computing and Networking. *MOBICOM,* 2003
- **R. FONSECA ; S. RATNASAMY ; J. ZHAO ; C. T. EE ; D. CULLER ; S. SHENKER ; L. STOICA.** Beacon-Vector Routing: Scalable Point-to-Point Routing in Wireless Sensor Networks. *NSDI,* 2005
- **JAMES NEWSOME ; DAWN SONG.** GEM: graph embedding for routing and data-centric storage in sensor networks without geographic information. *In 1 st international conference on embedded networked sensor systems,* 2003